# EUROPEAN PATENT SPECIFICATION

(11) **EP 4 379 549 B1**
(45) Date of publication and mention of the grant of the patent: **12.08.2026**
(21) Application number: 22210814.4
(22) Date of filing: 01.12.2022
(51) Int. Cl.: G06F 9/50

(54) **METHOD FOR PROVIDING A COMMUNICATION AND COMPUTING SERVICE SESSION**
VERFAHREN ZUR BEREITSTELLUNG EINER KOMMUNIKATIONS- UND RECHNERDIENSTSITZUNG
PROCÉDÉ POUR FOURNIR UNE SESSION DE COMMUNICATION ET DE SERVICE INFORMATIQUE

(43) Date of publication of application: 05.06.2024
(73) Proprietor: NTT DOCOMO, INC., Chiyoda-Ku Tokyo 100-6150 (JP)
(72) Inventor: ERKILIC CIVELEK, Tugce, 80687 Munich (DE); GUERZONI, Riccardo, 80687 Munich (DE); SAMA, Malla Reddy, 80687 Munich (DE)
(74) Representative: Viering, Jentschura & Partner mbB Patent- und Rechtsanwälte

(56) References cited:
- CN-A- 110 287 034
- US-A1- 2012 246 214
- US-B1- 10 419 283

## Description

The present disclosure relates to methods for providing a communication and computing service communication session.

Various services, like artificial intelligence based services, e.g. for augmented reality or control, require high computational effort. Therefore, it is desirable to distribute them over multiple devices, in particular for example on cloud devices which may provide high computational power. On the other hand, this requires computational resources, e.g. when results of such a service are needed by a mobile terminal and need to be communicated to the mobile terminal, possibly with a certain quality of service like latency. Processing only on a mobile terminal may however not be possible due to limited computational power on the mobile terminal as well as undesirable energy consumption.

Accordingly, efficient approaches for providing communication and computing services are desirable.

US 2012/246214 A1 teaches calculation of power consumption and selection of allocation sets that lower that consumption, but it does not define a numerical power ceiling or a control mechanism that enforces such a ceiling.

According to various embodiments, a method for providing a communication and computing service is described, including receiving an indication of an energy consumption target, selecting a service provision profile which specifies a distribution of tasks of the communication and computing service between the mobile terminal and one or more other computing devices, wherein, if it is determined that it is possible, the service provision profile is selected such that, when the mobile terminal and the one or more other computing devices perform computations as specified by the service provision profile, the energy consumption target is met and providing the communication and computing service session by distributing tasks of the communication and computing service to the mobile terminal and the one or more other computing devices in accordance with the selected service provision profile.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system
- Figure 2: illustrates a link and computing profile.
- Figure 3: illustrates a flow for provision of a communication and computing service with respect to computational, link quality and energy consumption requirements.
- Figure 4: shows a message flow diagram illustrating a message flow for provision of a communication and computing service with respect to computational, link quality and energy consumption requirements.
- Figure 5: shows a flow diagram illustrating a method for providing a communication and computing service according to an embodiment.

The following detailed description refers to the accompanying drawings that show, by way of illustration, specific details and aspects of this disclosure in which the invention may be practiced. Other aspects may be utilized and structural, logical, and electrical changes may be made.

The various aspects of this disclosure are not necessarily mutually exclusive, as some aspects of this disclosure can be combined with one or more other aspects of this disclosure to form new aspects.

It should be noted that one or more of the features of any of the examples may be combined with any one of the other examples. In particular, the Examples described in context of the device are analogously valid for the method.

According to further embodiments, a computer program and a computer readable medium including instructions, which, when executed by a computer, make the computer perform the method of any one of the above Examples are provided.

In the following, various examples will be described in more detail.

In the following, various examples will be described in more detail.

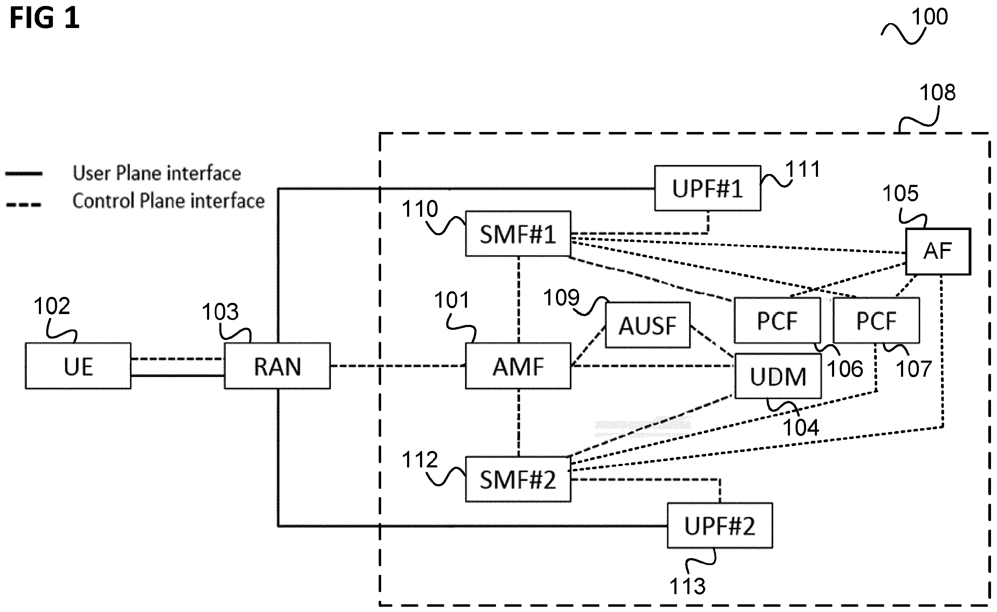

Figure 1 shows a radio communication system 100, for example configured according to 5G (Fifth Generation) or 6G (Sixth Generation) as specified by 3GPP (Third Generation Partnership Project), i.e. for example a 5GS or 6GS.

The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile radio communication network (e.g. a Public Land Mobile Network PLMN).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another mobile radio communication standard but 5G is herein used as an example. Each radio access network node 103 may provide a radio communication with the mobile radio terminal device 102 over an air interface. It should be noted that the radio access network 103 may include any number of radio access network nodes.

The radio communication system 100 further includes a core network (CN, here 5GC) 108 including an Access and Mobility Management Function (AMF) 101 connected to the RAN 103 and a Unified Data Management (UDM) 104. Here and in the following examples, the UDM may further consist of the actual UE's subscription database, which is known as, for example, the UDR (Unified Data Repository). The core network 108 further includes an AUSF (Authentication Server Function) 109 and one or more PCFs (Policy Control Functions), in this example a first PCF 106 and a second PCF 107.

The core network 108 further includes multiple Session Management Functions (SMFs), in this example a first Session Management Function (SMF) 110 and a second Session Management Function (SMF) 112 and multiple User Plane Functions (UPFs), in this example a first User Plane Function (UPF) 111 a second User Plane Function (UPF) 113. The SMFs 110, 112 are for handling PDU (Protocol Data Unit) sessions, i.e. for creating, updating and removing PDU sessions and managing session context with the User Plane Function (UPF).

The core network 108 further includes an application function (AF) 105. The AF 105 is shown to be directly connected to the SMFs 110, 112 and PCFs 106, 107 but may also be connected to them via an NEF (Network Exposure Function), in particular in case the AF 105 is maintained by a third party (i.e. a party other than the operation of the mobile radio communication system 100.

The AF 105 enables an application to request the 5G system 100 to support specific QoS (Quality of Service) policies for a UE 102 that establishes a PDU session to provide a communication service for that application.

An application may also involve computational tasks, like for example for artificial intelligence (i.e. machine learning). Examples include applications for robot control and augmented reality (for a mobile terminal). This may require computation-intensive tasks (and thus also tasks with high energy consumption). The tasks for such an application may be distributed to multiple components of the communication system 100 (including offloading computation-intensive tasks requiring high energy consumption to network endpoints), such as the UE 102 itself and one or more cloud devices connected via a UPF 111, 113.

Thus, providing the application includes computational tasks as well as a communication service for enabling communication between the components performing these computational tasks. The service provided by the communication system is therefore herein referred to as a communication and computing service (since it includes computational as well as communication tasks).

According to various embodiment, the application which requires the communication and computing service, i.e. the application layer, may indicate requirements regarding the communication and computing service, such as latency or response time (e.g. in a real-time application, specifying the time within which a result needs to be provided), a reliability (i.e. a limit of the risk that the service fails) or redundancy level, an accuracy or error rate (e.g. of errors caused by communication errors) etc. These requirements may for example be provided by a mobile terminal (using the application) or an AF for example.

The control plane of the communication system 100 selects, according to the requirements, a certain (communication) link and computing profile for the communication and computing service. The link and computing profile may be from a set of link and computing profiles, wherein each link and computing profile corresponds to respective option for splitting the tasks for the communication and computing service.

The application layer (e.g. a mobile terminal) may also directly request one of the link and computing profiles.

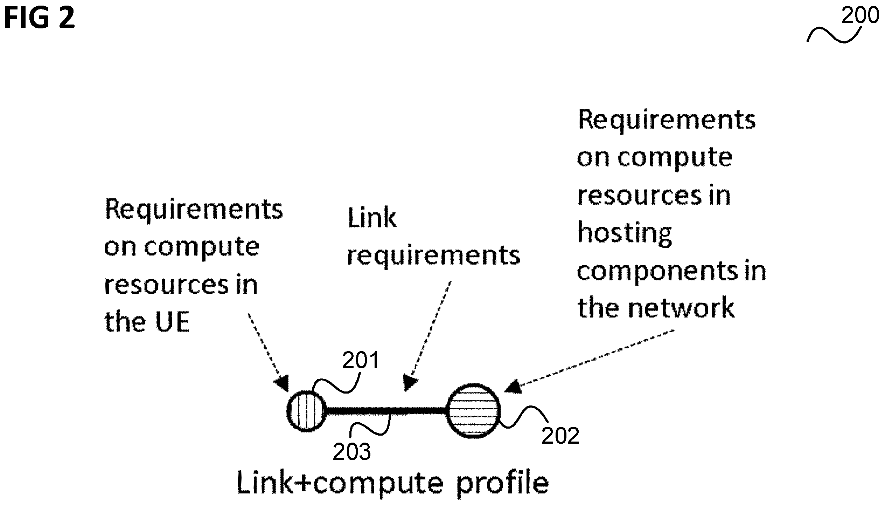

Figure 2 illustrates a link and computing profile 200.

In the present example, it is assumed that a UE (generally a mobile terminal) 201 and one or more resource hosting components 202 (of the network side, also referred to as one or more other computing devices (besides the mobile terminal)) should perform computational tasks for a communication and computing service.

Accordingly, the link and computing profile 200 defines requirements regarding computational resources of the UE 201 for the communication and computing service, and requirements regarding computational resources of the one or more hosting devices 202 for the communication and computing service. Further, the link and computing profile 200 defines a quality of the link 203 (e.g. a QoS) between the UE and the one or more hosting devices 202.

The one or more hosting devices 202 may for example include one or more cloud devices which are connected via a UPF. Accordingly, the requirements regarding computational resources of the one or more hosting devices 202 can also be seen as requirements regarding computational resources that the UPF may provide.

Further, according to various embodiments, a limit or target on the energy consumption or energy efficiency, in particular an energy consumption of the UE 201 may be provided. It should be noted that each link and computing profile may corresponds to an energy consumption of the UE and the one or more hosting devices, namely the energy consumption which results from the respective task or tasks that the UE and the one or more hosting devices should perform according to the link and computing profile.

Examples of requirements regarding computational resources may include
- for the UE: CPU, on-chip and off-chip memory, number and size of neural network accelerator engines
- for a cloud device: memory and compute capabilities (e.g. CPU)

As mentioned above, the control plane of the communication system 100, i.e. one or more control plane components, e.g. an SMF 110, 112 or a PCF 106, selects a link and computing profile 200 to be used for the communication and computing service according to
- constraints on the communication and computational resources (e.g. with respect to what the communication system is capable of providing)
- targets of service performance and energy consumption and/or energy efficiency (according to the requirements of the communication and computing service). In particular, according to various embodiments, a control plane component selects the link and computing profile 200 (if possible) such that, when communication resources are used according to the link and computing profile 200, a energy consumption target is met (i.e. is respected, e.g. an energy consumption limit of a mobile terminal is not violated)

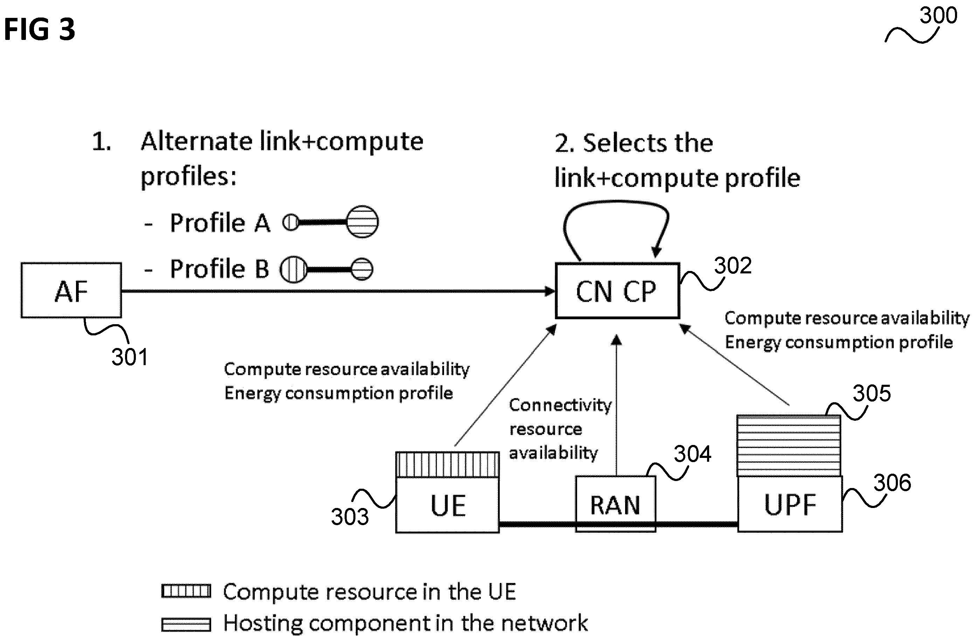

Figure 3 illustrates a flow for provision of a communication and computing service with respect to computational, link quality and energy consumption requirements.

An AF 301, a core network control plane (CP) component 302 (e.g. control plane network function (NF) such as an SMF or a PCF), a UE 303 (corresponding to UE 201), a RAN 304 and one or more resource hosting components 305 connected via a UPF 306 are involved in the flow.

In preparation perform communication and computing services (e.g. as a service session) involving separate components in the UE 303 and the network, the application layer (here the AF 301) issues alternative combined link and computing (i.e. link and computing profiles) to the mobile network (in particular the mobile network control plane component 302).

Further, for a specific communication and computing service to be provided for an application, the application layer (of the AF 301 or of the UE 303) provides requirements of the communication and computing service to the mobile network control plane component 302.

For a specific communication and computing service, the resource availability and energy consumption target of UE 303 is provided to the mobile network control plane component 302. Alternatively, the resource availability and energy consumption target of UE 303 is provided via application layer to the AF 301. The AF may provide these resource availability and energy consumption target of UE 303 to the control plane component 302.

Then, the mobile network control plane component 302 selects a link and computing profile based on:
- The requirements issued by the application layer
- Knowledge of communication (i.e. connectivity) resources that the mobile network may provide
- Knowledge of computational resources available in the UE 303 and resource hosting components 305
- Knowledge of energy consumption profiles of the UE and/or resource hosting components. An energy consumption profile of a device or component is an indicator of the energy efficiency of the compute component in the UE or the network. It may for example specify its energy consumption for a certain computational load, i.e. a mapping (or relation) between from utilization of computational resources to energy consumption.
- targets of service performance and energy efficiency (according to the requirements provided for the communication and computing service).

In particular, the control plane component 302 may balance between service performance and energy efficiency by considering the energy consumption profiles of the UE and/or resource hosting components (which it obtains in addition to the link and computing profiles, which do not include the energy consumption profiles).

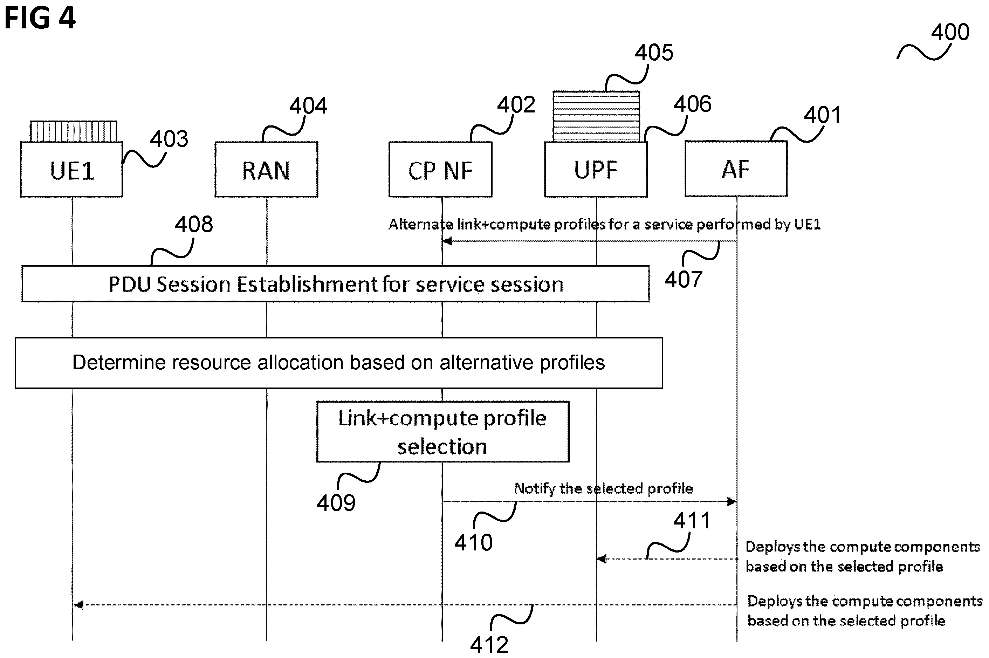

Figure 4 shows a message flow diagram 400 illustrating a message flow for provision of a communication and computing service with respect to computational, link quality and energy consumption requirements.

Similarly to figure 3, an AF 401, a core network control plane (CP) component 402 (e.g. control plane network function (NF) such as an SMF or a PCF), a UE 403 (corresponding to UE 201), a RAN 404 and one or more resource hosting components 405 connected via a UPF 406 are involved in the flow.

In 407, the AF 401 provides a set (e.g. a list) of possible link and computing profiles for a communication and computing service to the CP component 402.

In 408, a PDU session for the communication and computing service is established, i.e. a PDU session for exchanging data for the communication and computing service such as results of computations carried out by the UE 403 and the one or more resource hosting components 405.

Further, the resource allocation for at least some of the alternative link and computing profiles may be determined. It should be noted that, based on the available link and computing profiles as indicated by the AF 401, it might be beneficial to know the potential resource allocation for each profile. If, for example, there is an impairment in the network conditions so that the control plane switches to the best of the profiles, the determination of the resource allocation of the profiles may be omitted.

The UE 403 provides an indication of its available computational resources as well as its energy consumption profile to the CP component 402.

The UPF 406 provides (e.g. provided in turn by the one or more resource hosting components 405) the available resources of the one or more resource hosting components and the energy consumption profile(s) of the one or more resource hosting components to the CP component 402. Alternatively, the CP component 402 may obtain this information from another source, e.g. an NWDAF (network data analytics function).

Additionally, the CP component 402 is provided (e.g. by UE 403 or AF 401) with requirements (which may be strict requirements but also include targets) of the communication and computing service regarding service performance and energy consumption.

In 409, based on the received information, the CP NF 402 selects one of the link and computing profiles for the communication and computing service.

In 410, the CP NF 402 informs the AF 401 about which of the link and computing profiles it has selected.

In 411 and 412, the AF 401 allocates computational resources on the one or more resource hosting components 405 and the UE 403 for the communication and computing service according to the selected link and computing profiles, e.g. by distributing tasks to the UE 403 and the one or more resource hosting components 405.

The CP NF functionalities may be implemented by an SMF, a PCF, or both, i.e. an SMF may provide functionalities related to controlling the PDU session establishment and a PCF may provide functionalities related to receiving the link and computing requirements from the AF 401.

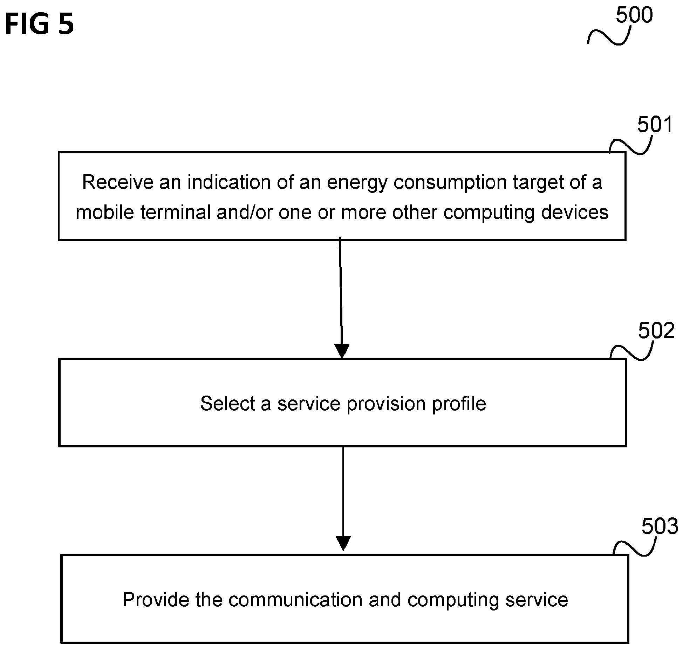

**In** summary, according to various embodiments, a method is provided as illustrated in figure 5.

Figure 5 shows a flow diagram 500 illustrating a method for providing a communication and computing service session (i.e. a (communication and computing) session for providing the communication and computing service) according to an embodiment.

**In** 501, an indication of an energy consumption target is received.

**In** 502, a service provision profile (also denoted as link and computing profile in the examples above) which specifies a distribution of tasks of the communication and computing service between the mobile terminal and one or more other computing devices is selected, wherein, if it is determined that it is possible, the service provision profile is selected such that, when the mobile terminal and the one or more other computing devices perform computations as specified by the service provision profile, the energy consumption target is met.

**In** 503, the communication and computing service session is provided by distributing tasks of the communication and computing service to the mobile terminal and the one or more other computing devices in accordance with the selected service provision profile.

According to various embodiments, in other words, tasks are distributed wherein an energy consumption target is respected if this is possible. Other requirements, in particular regarding the communication between the mobile terminal and the one or more other computing devices may also be taken into account. This means that it is determined whether there is a service provision profile among the service provision profiles for which it holds that, when the mobile terminal and the one or more other computing devices perform computations as specified by the service provision profile, the energy consumption target is met. This may be possible if there is one of the service provision profiles allows meeting the energy consumption target at all and whose selection does not violate any other criteria (i.e. the service provision profile is selectable). For example, if a performance requirement is prioritized over the energy consumption target which would be violated for a certain service provision profile that service provision profile may not be selectable.

So, for example, there may be a prioritization between performance requirements and energy consumption target: for example, if the energy consumption target is prioritized, the service provision profile is selected such that the energy consumption target is met while, if the performance requirements are prioritized and the energy consumption target is not met by some alternative profiles, the selection is made by the the mobile network control plane component 302 based on the prioritized performance requirement (i.e. a service provision profile which meets the energy consumption target is only selectable if it also meets the performance requirement in case the the performance requirement is prioritized).

The approach of figure 5 enables QoS optimization together with energy consumption minimization. This allows enhancing QoS flows based on QoS rules. Energy consumption is added as an input for profile selection which may make use of analytics data regarding energy efficiency. Thus, more flexible profiles (which take into account more aspects that link quality) are provided which allows better fitting to a broader range of use cases and allows higher sustainability and economic viability of energy-consuming services (e.g. AI-based services). In particular, the energy consumption may be optimized and a fair use of network resources with regard to energy consumption considering both computation requirements and link requirements may be achieved.

A link and computing profile may be selected based on a combination of service performance and energy saving criteria. For this, an energy consumption profile of one or more devices (or components) involved in the computations may be used as an indicator of the energy efficiency of the respective component (e.g. UE network component).

The approach may be implemented by introducing corresponding logic for PDU session establishment, e.g. logic in SMF and RAN nodes and an enhancement to QoS Profiles and may also involve in additional parameters in PCC (policy and charging control) rules.

It should further be noted that selecting the service provision profile such that the energy consumption target is met may be understood to determine one of the service provision profiles (by checking each of one or more of the service provision profiles) to ensure that the energy consumption target is met, i.e. selecting the service provision profile taking into account the criterion that the energy consumption target should be met.

The method is for example carried out by a communication system (which may include the mobile terminal and the one or more other computing devices), in particular one or more control plane components of a communication system, as for example illustrated in figure 1.

The method of figure 5, e.g. the components of a corresponding communication system (including the mobile terminal and the one or more other computing devices) may for example be implemented by (or include, respectively) one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the scope of the aspects of this disclosure as defined by the appended claims. The scope is thus indicated by the appended claims and all changes which come within the meaning and range of equivalency of the claims are therefore intended to be embraced.

## Claims

1. A method (500) for providing (503) a communication and computing service session, comprising:
receiving (501, 407) an indication of an energy consumption target;
receiving (501, 407) two or more alternative service provision profiles (200) which specify a distribution of tasks of the communication and computing service between a mobile terminal (201, 102, 301, 403) and one or more other computing devices (202, 105, 303, 401);
selecting (502) one of the service provision profiles (200), wherein, if it is determined that it is possible, the service provision profile (200) is selected such that, when the mobile terminal (201,102, 301, 403) and the one or more other computing devices (202, 105, 303, 401) perform computations as specified by the service provision profile (200), the energy consumption target is met; and
providing (503) the communication and computing service session by distributing tasks of the communication and computing service to the mobile terminal (201, 102, 301, 403) and the one or more other computing devices (202, 105, 303, 401) in accordance with the selected service provision profile (200);
wherein providing (503) of the communication and computing service session comprises providing (503) communication between the mobile terminal (201, 102, 301, 403) and the one or more other computing devices (202, 105, 303, 401) by a mobile communication system;
wherein receiving (501, 407) of the energy consumption target and selecting (502) of a service provision profile (200) is performed by one or more control plane components of the mobile communication system.

2. The method (500) of claim 1, wherein the energy consumption target is an energy consumption limit of the mobile terminal (201, 102, 301, 403) and/or a total energy consumption limit of the mobile terminal (201, 102, 301, 403) and the one or more other computing devices (202, 105, 303, 401).

3. The method (500) of claim 1 or 2, wherein selecting (502) the service provision profiles (200) comprises determining, for each of one or more of the service provision profiles (200), whether it holds that when the mobile terminal (201, 102, 301, 403) and the one or more other computing devices (202, 105, 303, 401) perform computations as specified by the service provision profile (200), the energy consumption target is met, wherein one of the service provision profiles (200) is selected for which it has been successfully checked that, when the mobile terminal (201, 102, 301, 403) and the one or more other computing devices (202, 105, 303, 401) perform computations as specified by the service provision profile (200), the energy consumption target is met.

4. The method (500) of any one of claims 1 to 3, wherein the service provision profile (200) specifies a quality of a communication connection between the mobile terminal (201, 102, 301, 403) and the one or more other computing devices (202, 105, 303, 401) and computation requirements on the mobile terminal (201,102, 301, 403) and the one or more other computing devices (202, 105, 303, 401);
and the communication and computing service session is provided by providing (503) a communication connection between the mobile terminal (201, 102, 301, 403) and the one or more other computing devices (202, 105, 303, 401) with the specified quality configuring the mobile terminal (201, 102, 301, 403) and the one or more other computing devices (202, 105, 303, 401) to fulfil the specified computation requirements.

5. The method (500) of claim 4, further comprising receiving (501, 407) an indication of one or more performance requirements of the communication and computing service, wherein the service provision profile (200) is selected such that, when the mobile terminal (201, 102, 301, 403) and the one or more other computing devices (202, 105, 303, 401) perform computations as specified by the service provision profile (200) and the quality of the communication connection between the mobile terminal (201, 102, 301, 403) and the one or more other computing devices (202, 105, 303, 401) used for communication in context of the communication and computing service has the specified quality, the one or more performance requirements are met.

6. The method (500) of claim 1, further comprising receiving an indication of one or more performance requirements of the communication and computing service and an indication of priority between the performance requirements and the energy consumption target and selecting the service provision profile taking the priority into account.

7. The method (500) of claim 6, wherein, if the priority prioritizes the one or more performance requirements, one of the service provision profiles (200) is selected such that, when the mobile terminal (201, 102, 301, 403) and the one or more other computing devices (202, 105, 303, 401) perform computations as specified by the service provision profile (200), the one or more performance requirements are met and, if the priority prioritizes the energy consumption target, one of the service provision profiles is selected such that, when the mobile terminal and the one or more other computing devices perform computations as specified by the service provision profile, the energy consumption target is met.

8. The method (500) of claim 6 or 7, wherein the one or more performance requirements comprise one or more of a response time of the communication and computing service, a reliability, a redundancy level, an accuracy and an error rate.

9. The method (500) of any one of claims 1 and 6 to 8, further comprising receiving (501, 407) an energy consumption profile (200) of the mobile terminal (201, 102, 301, 403) specifying a relation between usage of computational resources of the mobile terminal (201, 102, 301, 403) and energy consumption of the mobile terminal (201, 102, 301, 403), wherein selecting (502) the service provision profile (200) comprises determining, using the energy consumption profile (200), a usage of computational resources of the mobile terminal (201, 102, 301, 403) which meets the energy consumption target and selecting (502) the service provision profile (200) such that it specifies a distribution of tasks which leads to the determined usage of computational resources of the mobile terminal (201, 102, 301, 403) or less usage of computational resources of the mobile terminal (201, 102, 301, 403).

10. The method (500) of any one of claims 1 and 6 to 9, wherein the one or more other computing devices comprise one or more cloud devices.

11. The method (500) of any one of claims 1 and 6 to 10, wherein the service provision profile (200) is selected to optimize energy efficiency of the provision of the communication and computing service.

12. The method (500) of any one of claims 1 and 6 to 11, further comprising receiving (501, 407) information about resource availability of the mobile terminal (201, 102, 301, 403), the one or more other computing devices (202, 105, 303, 401) and/or communication resources between the mobile terminal (201, 102, 301, 403) and the one or more other computing devices (202, 105, 303, 401) and selecting (502) the service provision profile (200) such that it can be realized with resources that are available according to the received information.

13. The method (500) of claim 12, wherein at least one of the energy consumption target, the resource availability of the mobile terminal (201, 102, 301, 403), the one or more other computing devices (202, 105, 303, 401) and/or communication resources between the mobile terminal (201, 102, 301, 403) and the one or more other computing devices (202, 105, 303, 401) is provided by one or more application layer components.

14. A communication system (100) configured to perform the method of any one of claims 1 to 13.

## Patentansprüche

1. Ein Verfahren (500) zum Bereitstellen (503) einer Kommunikations- und Rechendienstsitzung, aufweisend:
Empfangen (501, 407) einer Angabe eines Energieverbrauchsziels;
Empfangen (501, 407) von zwei oder mehr alternativen Dienstbereitstellungsprofilen (200), die eine Verteilung von Aufgaben des Kommunikations- und Rechendienstes zwischen einem mobilen Endgerät (201, 102, 301, 403) und einer oder mehreren anderen Rechenvorrichtungen (202, 105, 303, 401) spezifizieren;
Auswählen (502) eines der Dienstbereitstellungsprofile (200), wobei, wenn festgestellt wird, dass dies möglich ist, das Dienstbereitstellungsprofil (200) so ausgewählt wird, dass, wenn das mobile Endgerät (201, 102, 301, 403) und die eine oder die mehreren anderen Rechenvorrichtungen (202, 105, 303, 401) Berechnungen wie von dem Dienstbereitstellungsprofil (200) spezifiziert durchführen, das Energieverbrauchsziel erreicht wird; und
Bereitstellen (503) der Kommunikations- und Rechendienstsitzung durch Verteilen von Aufgaben des Kommunikations- und Rechendienstes auf das mobile Endgerät (201, 102, 301, 403) und die eine oder die mehreren anderen Rechenvorrichtungen (202, 105, 303, 401) gemäß dem ausgewählten Dienstbereitstellungsprofil (200);
wobei das Bereitstellen (503) der Kommunikations- und Rechendienstsitzung das Bereitstellen (503) einer Kommunikation zwischen dem mobilen Endgerät (201, 102, 301, 403) und der einen oder den mehreren anderen Rechenvorrichtungen (202, 105, 303, 401) durch ein Mobil-Kommunikationssystem aufweist;
wobei das Empfangen (501, 407) des Energieverbrauchsziels und das Auswählen (502) eines Dienstbereitstellungsprofils (200) durch eine oder mehrere Steuerungsebene-Komponenten des Mobilkommunikationssystems durchgeführt wird.

2. Verfahren (500) nach Anspruch 1, wobei das Energieverbrauchsziel eine Energieverbrauchsgrenze des mobilen Endgeräts (201, 102, 301, 403) und/oder eine Gesamtenergieverbrauchsgrenze des mobilen Endgeräts (201, 102, 301, 403) und der einen oder der mehreren anderen Rechenvorrichtungen (202, 105, 303, 401) ist.

3. Verfahren (500) nach Anspruch 1 oder 2, wobei das Auswählen (502) der Dienstbereitstellungsprofile (200) für jedes der einen oder mehreren Dienstbereitstellungsprofile (200) das Bestimmen aufweist, ob es gilt, dass, wenn das mobile Endgerät (201, 102, 301, 403) und die eine oder die mehreren anderen Rechenvorrichtungen (202, 105, 303, 401) Berechnungen wie von dem Dienstbereitstellungsprofil (200) spezifiziert durchführen, das Energieverbrauchsziel erreicht wird, wobei eines der Dienstbereitstellungsprofile (200) ausgewählt wird, für das erfolgreich überprüft wurde, dass, wenn das mobile Endgerät (201, 102, 301, 403) und die eine oder die mehreren anderen Rechenvorrichtungen (202, 105, 303, 401) Berechnungen wie von dem Dienstbereitstellungsprofil (200) spezifiziert durchführen, das Energieverbrauchsziel erreicht wird.

4. Das Verfahren (500) nach einem der Ansprüche 1 bis 3, wobei das Dienstbereitstellungsprofil (200) eine Qualität einer Kommunikationsverbindung zwischen dem mobilen Endgerät (201, 102, 301, 403) und der einen oder den mehreren anderen Rechenvorrichtungen (202, 105, 303, 401) sowie Rechenanforderungen an das mobile Endgerät (201, 102, 301, 403) und die eine oder die mehrere anderen Rechenvorrichtungen (202, 105, 303, 401) festlegt;
und die Kommunikations- und Rechendienstsitzung bereitgestellt wird, indem zwischen dem mobilen Endgerät (201, 102, 301, 403) und der einen oder den mehreren anderen Rechenvorrichtungen (202, 105, 303, 401) eine Kommunikationsverbindung mit der angegebenen Qualität bereitgestellt wird, die das mobile Endgerät (201, 102, 301, 403) und die eine oder die mehreren anderen Rechenvorrichtungen (202, 105, 303, 401) so konfiguriert, dass sie die angegebenen Rechenanforderungen erfüllen.

5. Das Verfahren (500) nach Anspruch 4, das ferner das Empfangen (501, 407) einer Angabe einer oder mehrerer Leistungsanforderungen des Kommunikations- und Rechendienstes aufweist, wobei das Dienstbereitstellungsprofil (200) so ausgewählt wird, dass, wenn das mobile Endgerät (201, 102, 301, 403) und die eine oder die mehreren anderen Rechenvorrichtungen (202, 105, 303, 401) Berechnungen wie durch das Dienstbereitstellungsprofil (200) spezifiziert durchführen und die Qualität der Kommunikationsverbindung zwischen dem mobilen Endgerät (201, 102, 301, 403) und der einen oder den mehreren anderen Rechenvorrichtungen (202, 105, 303, 401), die für die Kommunikation im Kontext des Kommunikations- und Rechendiensts verwendet werden, die angegebene Qualität aufweist, die eine oder mehreren Leistungsanforderungen erfüllt sind.

6. Das Verfahren (500) nach Anspruch 1, das ferner den Empfang einer Angabe einer oder mehrerer Leistungsanforderungen des Kommunikations- und Rechendienstes und die Angabe einer Priorität zwischen den Leistungsanforderungen und dem Energieverbrauchsziel sowie das Auswählen des Dienstbereitstellungsprofils unter Berücksichtigung der Priorität aufweist.

7. Das Verfahren (500) nach Anspruch 6, wobei, wenn die Priorität die eine oder die mehreren Leistungsanforderungen priorisiert, eines der Dienstbereitstellungsprofile (200) so ausgewählt wird, dass, wenn das mobile Endgerät (201, 102, 301, 403) und die eine oder die mehreren anderen Rechenvorrichtungen (202, 105, 303, 401) Berechnungen wie von dem Dienstbereitstellungsprofil (200) spezifiziert durchführen, die eine oder mehrere Leistungsanforderungen erfüllt sind, und wenn die Priorität das Energieverbrauchsziel priorisiert, eines der Dienstbereitstellungsprofile so ausgewählt wird, dass, wenn das mobile Endgerät und die eine oder mehrere anderen Rechenvorrichtungen Berechnungen wie von dem Dienstbereitstellungsprofil spezifiziert durchführen, das Energieverbrauchsziel erfüllt ist.

8. Das Verfahren (500) nach Anspruch 6 oder 7, wobei die eine oder die mehreren Leistungsanforderungen eine oder mehrere von einer Reaktionszeit des Kommunikations- und Rechendienstes, einer Zuverlässigkeit, einem Redundanzgrad, einer Genauigkeit und einer Fehlerrate aufweisen.

9. Das Verfahren (500) nach irgendeinem der Ansprüche 1 und 6 bis 8, das ferner das Empfangen (501, 407) eines Energieverbrauchsprofils (200) des mobilen Endgeräts (201, 102, 301, 403) aufweist, das eine Beziehung zwischen der Nutzung von Rechenressourcen des mobilen Endgeräts (201, 102, 301, 403) und einem Energieverbrauch des mobilen Endgeräts (201, 102, 301, 403) spezifiziert, wobei das Auswählen (502) des Dienstbereitstellungsprofils (200) das Ermitteln einer Nutzung von Rechenressourcen des mobilen Endgeräts (201, 102, 301, 403), die das Energieverbrauchsziel erfüllt, unter Verwendung des Energieverbrauchsprofils (200) und das Auswählen (502) des Dienstbereitstellungsprofils (200) so, dass es eine Verteilung von Aufgaben festlegt, die zu der ermittelten Nutzung der Rechenressourcen des mobilen Endgeräts (201, 102, 301, 403) oder zu einer geringeren Nutzung der Rechenressourcen des mobilen Endgeräts (201, 102, 301, 403) führen, aufweist.

10. Das Verfahren (500) nach einem der Ansprüche 1 und 6 bis 9, wobei die eine oder die mehrere anderen Rechenvorrichtungen eine oder mehrere Cloud-Vorrichtungen aufweisen.

11. Das Verfahren (500) nach einem der Ansprüche 1 und 6 bis 10, wobei das Dienstbereitstellungsprofil (200) ausgewählt wird, um die Energieeffizienz der Bereitstellung des Kommunikations- und Rechendienstes zu optimieren.

12. Das Verfahren (500) nach einem der Ansprüche 1 und 6 bis 11, das ferner das Empfangen (501, 407) von Informationen über die Ressourcenverfügbarkeit des mobilen Endgeräts (201, 102, 301, 403), der einen oder der mehreren anderen Rechenvorrichtungen (202, 105, 303, 401) und/oder Kommunikationsressourcen zwischen dem mobilen Endgerät (201, 102, 301, 403) und der einen oder den mehreren anderen Rechenvorrichtungen (202, 105, 303, 401) und das Auswählen (502) des Dienstbereitstellungsprofils (200) derart, dass es mit den gemäß den empfangenen Informationen verfügbaren Ressourcen realisiert werden kann, aufweist.

13. Das Verfahren (500) nach Anspruch 12, wobei mindestens eines von dem Energieverbrauchsziel, der Ressourcenverfügbarkeit des mobilen Endgeräts (201, 102, 301, 403), der einen oder der mehreren anderen Rechenvorrichtungen (202, 105, 303, 401) und/oder den Kommunikationsressourcen zwischen dem mobilen Endgerät (201, 102, 301, 403) und der einen oder den mehreren anderen Rechenvorrichtungen (202, 105, 303, 401) von einer oder mehreren Anwendungsschichtkomponenten bereitgestellt werden.

14. Ein Kommunikationssystem (100), das eingerichtet ist, um das Verfahren nach einem der Ansprüche 1 bis 13 auszuführen.

## Revendications

1. Procédé (500) pour fournir (503) une session de service de communication et de calcul, comprenant :
la réception (501, 407) d'une indication d'un objectif de consommation d'énergie ;
la réception (501, 407) de deux ou plusieurs profils de fourniture de service alternatifs (200) qui spécifient une répartition de tâches du service de communication et de calcul entre un terminal mobile (201, 102, 301, 403) et un ou plusieurs autres dispositifs de calcul (202, 105, 303, 401) ;
la sélection (502) de l'un des profils de fourniture de service (200), où, s'il est déterminé que cela est possible, le profil de fourniture de service (200) est sélectionné de telle sorte que, lorsque le terminal mobile (201, 102, 301, 403) et ledit un ou lesdits plusieurs autres dispositifs de calcul (202, 105, 303, 401) effectuent des calculs tels que spécifiés par le profil de fourniture de service (200), l'objectif de consommation d'énergie soit atteint ; et
la fourniture (503) de la session de service de communication et de calcul en répartissant les tâches du service de communication et de calcul entre le terminal mobile (201, 102, 301, 403) et ledit un ou lesdits plusieurs autres dispositifs de calcul (202, 105, 303, 401) conformément au profil de fourniture de service sélectionné (200) ;
dans lequel la fourniture (503) de la session de service de communication et de calcul comprend la fourniture (503) d'une communication entre le terminal mobile (201, 102, 301, 403) et ledit un ou lesdits plusieurs autres dispositifs de calcul (202, 105, 303, 401) par un système de communication mobile ;
dans lequel la réception (501, 407) de l'objectif de consommation d'énergie et la sélection (502) d'un profil de fourniture de service (200) sont effectuées par un ou plusieurs composants de plan de contrôle du système de communication mobile.

2. Procédé (500) selon la revendication 1, dans lequel l'objectif de consommation d'énergie est une limite de consommation d'énergie du terminal mobile (201, 102, 301, 403) et/ou une limite de consommation d'énergie totale du terminal mobile (201, 102, 301, 403) et dudit un ou desdits plusieurs autres dispositifs de calcul (202, 105, 303, 401).

3. Procédé (500) selon la revendication 1 ou 2, dans lequel la sélection (502) des profils de fourniture de service (200) comprend la détermination, pour chacun d'un ou de plusieurs des profils de fourniture de service (200), s'il est vrai que, lorsque le terminal mobile (201, 102, 301, 403) et ledit un ou lesdits plusieurs autres dispositifs de calcul (202, 105, 303, 401) effectuent des calculs tels que spécifiés par le profil de fourniture de service (200), l'objectif de consommation d'énergie est atteint, dans lequel l'un des profils de fourniture de service (200) est sélectionné pour lequel il a été vérifié avec succès que, lorsque le terminal mobile (201, 102, 301, 403) et ledit un ou lesdits plusieurs autres dispositifs de calcul (202, 105, 303, 401) effectuent des calculs conformément au profil de fourniture de service (200), l'objectif de consommation d'énergie est atteint.

4. Procédé (500) selon l'une quelconque des revendications 1 à 3, dans lequel le profil de fourniture de service (200) spécifie une qualité d'une connexion de communication entre le terminal mobile (201, 102, 301, 403) et ledit un ou lesdits plusieurs autres dispositifs de calcul (202, 105, 303, 401), ainsi que les exigences de calcul imposées au terminal mobile (201, 102, 301, 403) et audit un ou auxdits plusieurs autres dispositifs de calcul (202, 105, 303, 401) ;
et la session de service de communication et de calcul est fournie en fournissant (503) une connexion de communication entre le terminal mobile (201, 102, 301, 403) et ledit un ou lesdits plusieurs autres dispositifs de calcul (202, 105, 303, 401) avec la qualité spécifiée, en configurant le terminal mobile (201, 102, 301, 403) et ledit un ou lesdits plusieurs autres dispositifs de calcul (202, 105, 303, 401) de manière à répondre aux exigences de calcul spécifiées.

5. Procédé (500) selon la revendication 4, comprenant en outre la réception (501, 407) d'une indication d'une ou de plusieurs exigences de performance du service de communication et de calcul, dans lequel le profil de fourniture de service (200) est sélectionné de telle sorte que, lorsque le terminal mobile (201, 102, 301, 403) et ledit un ou lesdits plusieurs autres dispositifs de calcul (202, 105, 303, 401) effectuent des calculs tels que spécifiés par le profil de fourniture de service (200) et que la qualité de la connexion de communication entre le terminal mobile (201, 102, 301, 403) et ledit un ou lesdits plusieurs autres dispositifs de calcul (202, 105, 303, 401) utilisés pour la communication dans le cadre du service de communication et de calcul présente la qualité spécifiée, ladite une ou lesdites plusieurs exigences de performance sont satisfaites.

6. Procédé (500) selon la revendication 1, comprenant en outre la réception d'une indication d'une ou de plusieurs exigences de performance du service de communication et de calcul, ainsi qu'une indication de priorité entre les exigences de performance et l'objectif de consommation d'énergie, et la sélection du profil de fourniture de service en tenant compte de cette priorité.

7. Procédé (500) selon la revendication 6, dans lequel, si la priorité accorde la priorité à ladite une ou auxdites plusieurs exigences de performance, l'un des profils de fourniture de service (200) est sélectionné de telle sorte que, lorsque le terminal mobile (201, 102, 301, 403) et ledit un ou lesdits plusieurs autres dispositifs de calcul (202, 105, 303, 401) effectuent des calculs tels que spécifiés par le profil de fourniture de service (200), ladite une ou lesdites plusieurs exigences de performance soient satisfaites et, si la priorité accorde la priorité à l'objectif de consommation d'énergie, l'un des profils de fourniture de service est sélectionné de telle sorte que, lorsque le terminal mobile et ledit un ou lesdits plusieurs autres dispositifs de calcul effectuent des calculs tels que spécifiés par le profil de fourniture de service, l'objectif de consommation d'énergie soit atteint.

8. Procédé (500) selon la revendication 6 ou 7, dans lequel ladite une ou lesdites plusieurs exigences de performance comprennent un ou plusieurs parmi un temps de réponse du service de communication et de calcul, une fiabilité, un niveau de redondance, une précision et un taux d'erreur.

9. Procédé (500) selon l'une quelconque des revendications 1 et 6 à 8, comprenant en outre la réception (501, 407) d'un profil de consommation d'énergie (200) du terminal mobile (201, 102, 301, 403) spécifiant une relation entre l'utilisation de ressources de calcul du terminal mobile (201, 102, 301, 403) et la consommation d'énergie du terminal mobile (201, 102, 301, 403), dans lequel la sélection (502) du profil de fourniture de service (200) comprend la détermination, en utilisant le profil de consommation d'énergie (200), d'une utilisation de ressources de calcul du terminal mobile (201, 102, 301, 403) qui satisfait l'objectif de consommation d'énergie, et la sélection (502) du profil de fourniture de service (200) de telle sorte qu'il spécifie une répartition de tâches conduisant à l'utilisation déterminée de ressources de calcul du terminal mobile (201, 102, 301, 403) ou à une utilisation moindre de ressources de calcul du terminal mobile (201, 102, 301, 403).

10. Procédé (500) selon l'une quelconque des revendications 1 et 6 à 9, dans lequel ledit un ou lesdits plusieurs autres dispositifs de calcul comprennent un ou plusieurs dispositifs cloud.

11. Procédé (500) selon l'une quelconque des revendications 1 et 6 à 10, dans lequel le profil de fourniture de service (200) est sélectionné pour optimiser l'efficacité énergétique de la fourniture du service de communication et de calcul.

12. Procédé (500) selon l'une quelconque des revendications 1 et 6 à 11, comprenant en outre la réception (501, 407) d'informations concernant la disponibilité de ressources du terminal mobile (201, 102, 301, 403), dudit un ou desdits plusieurs autres dispositifs de calcul (202, 105, 303, 401) et/ou des ressources de communication entre le terminal mobile (201, 102, 301, 403) et ledit un ou lesdits plusieurs autres dispositifs de calcul (202, 105, 303, 401), et la sélection (502) du profil de fourniture de service (200) de telle sorte qu'il puisse être mis en œuvre avec des ressources disponibles selon les informations reçues.

13. Procédé (500) selon la revendication 12, dans lequel au moins l'un parmi l'objectif de consommation d'énergie, la disponibilité de ressources du terminal mobile (201, 102, 301, 403), dudit un ou desdits plusieurs autres dispositifs de calcul (202, 105, 303, 401) et/ou des ressources de communication entre le terminal mobile (201, 102, 301, 403) et ledit un ou lesdits plusieurs autres dispositifs de calcul (202, 105, 303, 401) est fourni par un ou plusieurs composants de couche application.

14. Système de communication (100) configuré pour mettre en œuvre le procédé selon l'une quelconque des revendications 1 à 13.
